# EUROPÄISCHE PATENTSCHRIFT

(11) **EP 3 638 925 B1**
(45) Veröffentlichungstag und Bekanntmachung des Hinweises auf die Patenterteilung: **21.04.2021**
(21) Anmeldenummer: 17731533.0
(22) Anmeldetag: 14.06.2017
(51) Int. Cl.: F16H 63/34

(54) **PARKSPERRENANORDNUNG FÜR EINEN ANTRIEBSSTRANG EINES KRAFTFAHRZEUGES UND ANTRIEBSEINHEIT MIT EINER SOLCHEN PARKSPERRENANORDNUNG**
PARKING LOCK ARRANGEMENT FOR A DRIVE TRAIN OF A MOTOR VEHICLE AND DRIVE UNIT HAVING SUCH A PARKING LOCK ARRANGEMENT
DISPOSITIF FORMANT FREIN DE STATIONNEMENT POUR UNE CHAÎNE CINÉMATIQUE D'UN VÉHICULE ET UNITÉ D'ENTRAÎNEMENT AYANT UN TEL DISPOSITIF FORMANT FREIN DE STATIONNEMENT

(43) Veröffentlichungstag der Anmeldung: 22.04.2020
(73) Patentinhaber: GKN Automotive Ltd., West Midlands, B37 7YE (GB)
(72) Erfinder: SCHMIDT, Mark, 53639 Königswinter (DE); BROICHER, Simon, 50354 Hürth (DE)
(74) Vertreter: Neumann Müller Oberwalleney & Partner Patentanwälte
(86) Internationale Anmeldenummer: PCT/EP2017/064613
(87) Internationale Veröffentlichungsnummer: WO 2018/228686

(56) Entgegenhaltungen:
- DE-A1- 4 447 512
- DE-A1- 10 105 637
- DE-A1-102009 023 498
- DE-B4-102010 029 401

## Beschreibung

Die Erfindung betrifft eine Parksperrenanordnung für einen Antriebsstrang eines Kraftfahrzeuges, umfassend einen steuerbaren Sperrmechanismus zum Blockieren einer Drehbewegung eines Antriebselementes im Antriebstrang des Kraftfahrzeugs, wobei der Sperrmechanismus einen Spindelantrieb mit einer um eine Spindelachse drehend antreibbaren Spindelwelle, einen Aktuator zum drehenden Antreiben der Spindelwelle und ein durch Drehen der Spindelwelle bewegbares Stellelement zum Betätigen eines Sperrelements, das auf das Antriebselement blockierend oder freigebend einwirkt, aufweist, und einen Entriegelungsmechanismus zum Zwangsentriegeln des Sperrmechanismus, wobei der Entriegelungsmechanismus ein Entriegelungselement zum Drehen der Spindelwelle und ein manuell betätigbares Betätigungselement zum Betätigen des Entriegelungselements aufweist. Weiterhin betrifft die Erfindung eine Antriebseinheit insbesondere für eine Elektroantriebsanordnung zum Antreiben eines Kraftfahrzeuges mit einer Parksperrenanordnung zum Blockieren einer Drehbewegung des Antriebselementes.

Parksperren werden in Antriebssträngen von Kraftfahrzeugen eingesetzt, um ein Antriebsbauteil im Antriebsstrang bei Bedarf zu blockieren, sodass das Kraftfahrzeug an einem unbeabsichtigten Wegrollen gehindert wird. Weiterhin kann die Parksperre beispielsweise in einer Elektroantriebsanordnung aktiviert werden, um neben der Hauptaufgabe, das Fahrzeug im geparkten Zustand sicher festzuhalten, ein unbeabsichtigtes Wegrollen des Kraftfahrzeuges zu verhindern, wenn die Bordelektronik des Kraftfahrzeuges ausfällt. Die bekannten Parksperren weisen üblicherweise einen Aktuator auf, der mit einem Sperrelement, das auf eine Antriebswelle blockierend oder freigebend einwirkt, zusammenwirkt. Um jedoch bei einem Ausfall des Aktuators, beispielsweise hervorgerufen durch einen Defekt der Bordelektronik, das Sperrelement wieder lösen zu können, um das Kraftfahrzeug gegebenenfalls abschleppen zu können, sind Vorrichtungen zur Zwangsentriegelung beziehungsweise Notentriegelung bekannt.

Aus der DE 10 2010 029 401 B4 ist eine Parksperrenanordnung mit einem Sperrmechanismus, einem Aktuator und einem Entriegelungsmechanismus bekannt. Der Sperrmechanismus umfasst ein Sperrelement, das von dem Aktuator linear bewegbar ist und eine Sperrklinke, die mit dem Sperrelement zusammenwirkt, um eine Welle zu blockieren. Um im blockierten Zustand eine Zwangsentriegelung zu ermöglichen, ist der Entriegelungsmechanismus vorgesehen, der ein Entriegelungselement zum Verdrehen des Sperrelements aufweist. Das Sperrelement weist eine Ausnehmung in einem Umfangsabschnitt auf, in die die Sperrklinke eintauchen kann. Das Entriegelungselement kann über einen außerhalb des Gehäuses befindlichen Betätigungshebel manuell gedreht werden. Der Betätigungshebel ist mit einem Seilzug verbunden, sodass bei Ausfall der Elektronik die Antriebswelle durch Betätigen des Seilzuges manuell freigegeben werden kann.

Aus der DE 101 05 637 A1 ist eine weitere Parksperrenanordnung mit einer manuell betätigbaren Notentriegelungsvorrichtung bekannt. Die bekannte Parksperrenanordnung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre und eine Sperrvorrichtung zur Arretierung der Parksperre im deaktivierten Zustand umfasst. Weiterhin ist ein drehbar gelagerter Hauptbetätigungshebel vorgesehen, über den der Federspeicher, der Stellantrieb und die Sperrvorrichtung mit dem Betätigungselement in Verbindung stehen beziehungsweise mit diesem in Wirkverbindung bringbar sind. Zur Notentriegelung der Parksperre ist ein mit dem Hauptbetätigungshebel verbundener Seilzug vorgesehen, der von einem Fahrerraum aus manuell betätigbar ist.

Der Erfindung liegt die Aufgabe zugrunde, eine verbesserte und einfacher herzustellende Parksperrenanordnung mit Zwangsentriegelung bereitzustellen, die zudem wartungsfreundlicher und robuster ist. Weiterhin liegt der Erfindung die Aufgabe zugrunde, eine verbesserte und einfacher herzustellende Antriebseinheit mit Zwangsentriegelung bereitzustellen, die zudem wartungsfreundlicher und robuster ist.

Eine Lösung besteht in einer Parksperrenanordnung der eingangs genannten Art, bei der das Entriegelungselement mittels des Betätigungselements aus einer Normalstellung, in der das Entriegelungselement von der Spindelwelle beabstandet ist, in eine Eingriffsstellung, in der das Entriegelungselement zum Zwangsentriegeln des Sperrmechanismus mit der Spindelwelle drehmomentübertragend verbunden ist, bewegbar ist.

Ein Vorteil besteht darin, dass der Entriegelungsmechanismus im Normalbetrieb, bei dem der Sperrmechanismus regulär durch den Aktuator betätigt wird, um die Drehbewegung des Antriebselement zu blockieren und wieder freizugeben, von der Spindelwelle beabstandet ist. Somit greift der Entriegelungsmechanismus im Normalbetrieb nicht in den Sperrmechanismus ein und wird folglich auch nicht mitbewegt, wenn der Aktuator die Spindelwelle dreht. Nur dann, wenn der Aktuator ausfällt und der Sperrmechanismus das Antriebselement blockiert, muss der Entriegelungsmechanismus zur Zwangsentriegelung des Sperrmechanismus mit diesem verbunden werden. Hierzu wird das Entriegelungselement durch Betätigen des Betätigungselements in die Eingriffsstellung bewegt, in der das Entriegelungselement drehmomentübertragend mit der Spindelwelle verbunden ist. Dann kann die Spindelwelle durch manuelles Drehen des Entriegelungselements gedreht werden, um das Stellelement in eine Offenstellung zu bewegen, respektive überführen, in der das Sperrelement das Antriebselement wieder freigibt. Im Ergebnis greift der Entriegelungsmechanismus nur dann in den Sperrmechanismus ein, wenn dieser zwangsweise entriegelt werden muss. Dies kann beispielsweise dann der Fall sein, wenn die Bordelektronik des Kraftfahrzeuges ausfällt und der Aktuator, insbesondere ein elektromechanischer Aktuator zum Antreiben der Spindelwelle nicht zur Verfügung.

Die in der Eingriffsstellung hergestellte drehmomentübertragende Verbindung zwischen dem Entriegelungselement und der Spindelwelle gewährleistet, dass eine Drehbewegung des Entriegelungselements eine Drehbewegung der Spindelwelle um die Spindelachse bewirkt. Hierzu können die beiden Bauteile unmittelbar miteinander verbunden sein, wobei auch eine indirekte Verbindung über zumindest ein im Drehmomentfluss zwischengeschaltetes weiteres Bauteil grundsätzlich möglich ist.

Gemäß einer Ausgestaltung der vorliegenden Erfindung kann das Entriegelungselement um die Spindelachse drehbar angeordnet sein. Weiterhin kann das Entriegelungselement in Richtung der Spindelachse, das heißt axial bewegbar geführt sein. Dadurch kann das Entriegelungselement durch Bewegen in axialer Richtung hin zur Spindelwelle mit dieser drehmomentübertragend verbunden werden. Zudem wird durch das insbesondere konzentrisch zur Spindelachse angeordnete Entriegelungselement eine besonders kompakt bauende Parksperrenanordnung bereitgestellt, da auf eine Umlenkung oder dergleichen verzichtet werden kann, die beispielsweise bei einem schräg zur Spindelwelle oder radial, das heißt senkrecht zur Spindelachse ansetzenden Entriegelungselement notwendig werden könnte.

Gemäß einem weiteren Aspekt der vorliegenden Erfindung kann das Entriegelungselement drehfest mit dem Betätigungselement verbunden sein. Auf diese Weise wird das Entriegelungselement stets mitgedreht, wenn das Betätigungselement manuell betätigt wird. Dadurch wird der Vorgang der manuellen Zwangsentriegelung vereinfacht.

In bevorzugter Weise ist das Betätigungselement in Form einer Betätigungswelle gestaltet. Die Betätigungswelle kann sowohl ein Drehmoment um eine Mittellinie der Betätigungswelle als auch eine in Verlaufsrichtung der Mittellinie wirkende Kraft übertragen. Somit kann über die Betätigungswelle das Entriegelungselement auf einfache Weise in die Eingriffsstellung respektive zurück in die Normalstellung bewegt sowie um die Spindelachse gedreht werden. Vorzugsweise ist die Betätigungswelle flexibel gestaltet. Dann kann die Betätigungswelle mit einem gebogenen Verlauf im Kraftfahrzeug eingebaut werden. Insbesondere kann die Betätigungswelle aus mehreren zu einem Drahtseil verdrehten Metalllitzen geformt sein. Weiterhin kann die Betätigungswelle in einem Schutzrohr bewegbar geführt sein. Bewegbar bedeutet in diesem Zusammenhang, dass die Betätigungswelle innerhalb des Schutzrohres um die Mittellinie gedreht und in Richtung der insbesondere einen gebogenen Verlauf aufweisenden Mittellinie verschoben werden kann, um Druck- und Zugkräfte sowie Drehmomente übertragen zu können. Das Schutzrohr kann als biegsame Hülle respektive Schlauch ausgebildet sein. Die Betätigungswelle kann mit Kunststoff beschichtet sein, um deren Gleiteigenschaften im Schutzrohr und/oder deren Korrosionsbeständigkeit zu erhöhen. Von dem freien Längsende, das heißt dem vom Entriegelungselement entfernten Längsende der Betätigungswelle aus kann eine Person, beispielsweise der Fahrer des Kraftfahrzeuges die manuelle Zwangsentriegelung durchführen. Hierzu kann die Person auf das freie Längsende der Betätigungswelle eine Kraft ausüben, insbesondere eine in Verlaufsrichtung der Betätigungswelle wirkende Druckkraft, um das Entriegelungselement in die Eingriffsstellung zu überführen. Anschließend kann die Person die Betätigungswelle um deren Mittellinie drehen, um das entfernt liegende Entriegelungselement mitzudrehen. Im eingebauten Zustand der Parksperrenanordnung im Kraftfahrzeug kann die Betätigungswelle beispielsweise bis in einen Kofferraum, Innenraum oder Motorraum des Kraftfahrzeuges geführt sein, um die Zugänglichkeit des freien Längsendes der Betätigungswelle für die manuelle Zwangsentriegelung zu verbessern.

Weiterhin kann ein Führungselement, insbesondere eine Kabeldurchführung vorgesehen sein, durch die das freie Längsende des Betätigungselements, insbesondere der Betätigungswelle geführt ist. Das Führungselement kann in eine Aufnahme, insbesondere eine Bohrung in einem Kraftfahrzeugbauteil, beispielsweise einer Verkleidung im Kofferraum einsetzbar sein. Weiterhin kann das Schutzrohr gegen das Führungselement axial abgestützt sein. Des Weiteren kann das Schutzrohr am gegenüberliegenden Längsende an einem Gehäuse der Parksperrenanordnung oder der Antriebsanordnung axial abgestützt sein. Somit wird durch das Schutzrohr eine in Verlaufsrichtung der Betätigungswelle stabile Hülle bereitgestellt, um über das beweglich geführte Betätigungselement mechanische Bewegung beziehungsweise Druck- oder Zugkräfte und Drehmomente zu übertragen. Insbesondere kann an dem vom Entriegelungselement entfernten freien Längsende der Betätigungswelle ein Handgriff, beispielsweise ein tellerförmiger Knauf angeordnet sein. Vorzugsweise wird durch Herunterdrücken des Handgriffs, respektive durch Aufbringen einer in Richtung der Mittellinie des Betätigungselementes wirkenden Druckkraft auf den Handgriff das Entriegelungselement in die Eingriffsstellung bewegt. Durch manuelles Drehen des gedrückten Handgriffs kann dann das Drehmoment über die Betätigungswelle auf das Entriegelungselement übertragen werden, um die Spindelwelle um die Spindelachse zu drehen. Durch Aufbringen einer Zugkraft auf den Handgriff kann das Entriegelungselement zurück in die Normalstellung überführt werden. In bevorzugter Weise weist der Entriegelungsmechanismus hierzu Federmittel auf, die das Entriegelungselement in Richtung der Normalstellung federnd beaufschlagen. Insbesondere stützen sich die Federmittel an dem Handgriff einerseits und dem Führungselement, insbesondere der Kabeldurchführung andererseits ab. Auf diese Weise wird das Entriegelungselement stets in die Normalstellung zurückgestellt und wird nur bei manueller Betätigung des Handgriffs durch Ausübung einer der Federkraft entgegenwirkenden Druckkraft in die Eingriffsstellung bewegt. Grundsätzlich kann der Handgriff aber auch manuell zurückgezogen werden. Des Weiteren kann der insbesondere als Knauf ausgebildete Handgriff ein Rändelprofil aufweisen, um die Bedienbarkeit zu vereinfachen. Weiterhin kann der Handgriff ein Innenprofil oder Außenprofil aufweisen, um die Kraft und das Drehmoment mittels eines am Handgriff angesetzten Werkzeuges, beispielsweise eines Schraubendrehers, Ratschen-Schraubendrehers, Schraubenschlüssels oder dergleichen einleiten zu können.

Des Weiteren kann das Entriegelungselement einen hülsenförmigen Verbindungsabschnitt aufweisen, in den sich das Betätigungselement, insbesondere die Betätigungswelle hinein erstreckt. Insbesondere kann das Entriegelungselement eine Kunststoffhülse aufweisen, die den Verbindungsabschnitt umfasst. Die Kunststoffhülse kann mit dem Betätigungselement entlang des Verbindungsabschnittes formschlüssig oder durch Aufspritzen fest verbunden sein. Auf diese Weise kann das Entriegelungselement dauerhaft mit dem Betätigungselement verbunden sein, sodass die beiden Bauteile nur durch Zerstörung voneinander getrennt werden können.

Gemäß einer bevorzugten Ausgestaltung der vorliegenden Erfindung kann das Entriegelungselement ein erstes Formschlusselement und der Sperrmechanismus ein zweites Formschlusselement, das korrespondierend zum ersten Formschlusselement gestaltet und mit der Spindelwelle drehmomentübertragend verbunden ist, aufweisen. In der Eingriffsstellung sind das erste Formschlusselement und das zweite Formschlusselement formschlüssig miteinander verbunden, respektive greifen ineinander. Das erste Formschlusselement kann ein Innenprofil oder ein Außenprofil, beispielsweise ein Innen- oder Außensechskantprofil aufweisen. Entsprechend kann das zweite Formschlusselement ein zum Profil des ersten Formschlusselementes gegengleiches Profil in Form eines Außenprofils oder Innenprofils aufweisen. Es versteht sich, dass alternativ zum Sechskantprofil auch andere Profile, unter anderem ein Vierkant-, Fünfkant- oder Torx-Profil, eine lösbare und drehmomentübertragende Formschluss- respektive Steckverbindung ermöglichen, denkbar sind. Vorzugsweise ist das erste Formschlusselement drehfest mit dem Betätigungselement verbunden. Hierzu kann das erste Formschlusselement am der Spindelwelle zugewandten Längsende des Verbindungsabschnitts des Entriegelungselementes angeordnet sein. Alternativ zur drehfesten Verbindung kann das Entriegelungselement eine in nur einer Drehrichtung wirkende Kupplung aufweisen, sodass das erste Formschlusselement das über das Betätigungselement eingeleitete Drehmoment in einer umlaufenden Drehbewegung auf die Spindelwelle übertragen kann, analog zur Funktionsweise eines Ratschen-Schraubendrehers.

In bevorzugter Weise ist das zweite Formschlusselement an einem vom Aktuator entfernt liegenden Längsende der Spindelwelle ausgebildet. Insbesondere kann das zweite Formschlusselement an einer Stirnseite eines freien Längsendes der Spindelwelle angeordnet sein. Beispielsweise kann das zweite Formschlusselement ein am freien Längsende der Spindelwelle angeformtes Außen- oder Innensteckprofil sein. Das erste Formschlusselement kann durch axiales Überführen in die Eingriffsstellung mit dem zweiten Formschlusselement in Eingriff gebracht werden, beispielsweise durch Aufschieben des ersten Formschlusselementes auf das zweite Formschlusselement. In diesem Fall ist das Entriegelungselement in der Eingriffsstellung unmittelbar mit der Spindelwelle verbunden, wodurch eine besonders robuste und kompakt bauende Parksperrenanordnung bereitgestellt wird. Ebenso möglich ist, dass das zweite Formschlusselement an einer mit der Spindelwelle verbundenen Rotorwelle des insbesondere elektromechanischen Aktuators ausgebildet. Zum Beispiel kann die Rotorwelle des Aktuators an beiden Längsenden aus einem Aktuatorgehäuse vorstehen, wobei ein erstes Längsende der Rotorwelle mit der Spindelwelle gekoppelt und ein zweites Längsende der Rotorwelle als Verbindungsstelle für das Entriegelungselement dienen könnte, um in der Eingriffsstellung das Drehmoment über die Rotorwelle auf die Spindelwelle zu übertragen. Entsprechend könnte das zweite Formschlusselement an der Rotorwelle angeordnet beziehungsweise angeformt sein.

Um bei einem Defekt des Aktuators diesen auf einfache Weise austauschen zu können, kann die Parksperrenanordnung zwei baulich voneinander getrennte Wellen aufweisen, nämlich die Rotorwelle und die Spindelwelle. Grundsätzlich kann die Parksperrenanordnung aber auch nur eine einzige durchgehende Motorwelle aufweisen, die einen Spindelwellenabschnitt für den Spindelantrieb und einen im Aktuator drehbar gelagerten Rotorwellenabschnitt umfasst. Alternativ zur bevorzugten Ausgestaltung des Aktuators als elektromechanischer Antrieb kann der Aktuator auch ein hydraulisch oder pneumatisch betätigter Antrieb sein, um die Spindelwelle drehend anzutreiben.

Vorzugsweise ist das Stellelement in eine Offenstellung überführbar, in der das Sperrelement eine Freigabestellung einnimmt, in der das Antriebselement drehbar ist, und in eine Schließstellung überführbar, in der das Sperrelement eine Sperrstellung einnimmt, in der das Sperrelement die Drehbewegung das Antriebselement hemmt. Das Stellelement wird durch den Stellantrieb vorzugsweise ausschließlich axial bewegt. Somit kann die Offenstellung eine erste axiale Stellung und die Schließstellung eine zweite axiale Stellung sein. Weiterhin kann vorgesehen sein, dass das Stellelement auf der Spindelwelle angeordnet, insbesondere bewegbar angeordnet ist. Des Weiteren kann der Spindelantrieb eine auf der Spindelwelle drehfest gehaltene Spindelmutter aufweisen. Dann kann sich das Stellelement mit einer dem Aktuator zugewandten ersten Außenfläche, respektive einem Kragen an der Spindelmutter abstützen. Weiterhin kann der Sperrmechanismus eine Rückstellfeder aufweisen, die das Stellelement in Richtung der Schließstellung federnd beaufschlagt. Die Rückstellfeder kann sich an einer der ersten Außenfläche gegenüberliegenden zweiten Außenfläche, respektive einer Bodenseite des Stellelementes abstützen. Zweckmäßigerweise ist die Rückstellfeder radial außerhalb des Entriegelungselements angeordnet.

Ein weiterer Gegenstand der vorliegenden Erfindung ist eine Antriebseinheit, insbesondere eine Antriebseinheit für eine Elektroantriebsanordnung zum Antreiben eines Kraftfahrzeuges mit der zuvor beschriebenen Parksperrenanordnung. Mit der erfindungsgemäßen Antriebseinheit ergeben sich dieselben Vorteile wie mit der erfindungsgemäßen Parksperrenanordnung, und umgekehrt, sodass diesbezüglich auf obige Beschreibung verwiesen wird.

Die Antriebseinheit umfasst ein Antriebselement des Kraftfahrzeuges, deren Drehbewegung mittels der Parksperrenanordnung blockiert werden kann. Weiterhin weist die Antriebseinheit ein Gehäuse, respektive eine Gehäuseanordnung auf, in der das Antriebselement drehbar gelagert ist. Bei dem Antriebselement kann es sich prinzipiell um ein beliebiges drehmomentübertragendes Bauteil handeln, das im Antriebsstrang zwischen der Antriebseinheit und den Rädern des Kraftfahrzeuges angeordnet ist. Dabei kann das Antriebselement eine Antriebswelle, eine Getriebewelle oder ein anderes Bauteil sein, welches Drehmoment auf die Räder überträgt, wie zum Beispiel ein Differentialkorb eines Differentialgetriebes oder eine Komponente einer Bremse. Um einen Sperreffekt auf die Räder des Kraftfahrzeuges zu haben, muss lediglich eine direkte drehmomentübertragende Verbindung mit den Rädern bestehen. In dem Gehäuse, in dem das zu blockierende Antriebselement angeordnet beziehungsweise gelagert ist, ist vorzugsweise auch der Sperrmechanismus angeordnet. Darüber hinaus kann die Antriebseinheit in an sich bekannter Weise einen Antriebsmotor, insbesondere eine elektrische Maschine zum Antreiben des Antriebselementes und/oder ein Untersetzungsgetriebe und/oder ein Differentialgetriebe aufweisen.

In Bezug auf den Entriegelungsmechanismus ist zumindest das Entriegelungselement in dem Gehäuse untergebracht beziehungsweise angeordnet, in dem auch der Sperrmechanismus angeordnet ist. Um die manuelle Betätigung des innerhalb des Gehäuses angeordneten Entriegelungselements von außen zu ermöglichen, kann das Betätigungselement durch eine Gehäusebohrung des Gehäuses nach außen geführt sein.

Eine bevorzugte Ausführungsform wird nachstehend anhand der Zeichnungsfiguren erläutert. Hierin zeigt:
- Figur 1: eine Antriebseinheit mit einer Parksperrenanordnung gemäß einer Ausführungsform der vorliegenden Erfindung in Querschnittsansicht;
- Figur 2: ein Sperrmechanismus der Parksperrenanordnung in Explosionsansicht;
- Figur 3: ein vergrößerter Teilausschnitt der Antriebsanordnung aus Figur 1, wobei der Sperrmechanismus in einer Schließstellung und ein Entriegelungsmechanismus in einer Normalstellung dargestellt sind;
- Figur 4: ein vergrößerter Teilausschnitt des Entriegelungsmechanismus in der Normalstellung;
- Figur 5: ein vergrößerte Teilausschnitt des Entriegelungsmechanismus in der Eingriffsstellung;
- Figur 6: ein vergrößerter Teilausschnitt der Antriebsanordnung aus Figur 1, wobei der Sperrmechanismus in einer Schließstellung und ein Entriegelungsmechanismus in einer Eingriffsstellung dargestellt sind; und
- Figur 7: ein vergrößerter Teilausschnitt der Antriebsanordnung aus Figur 1, wobei die Parksperrenanordnung in einer notentriegelten Stellung dargestellt ist.

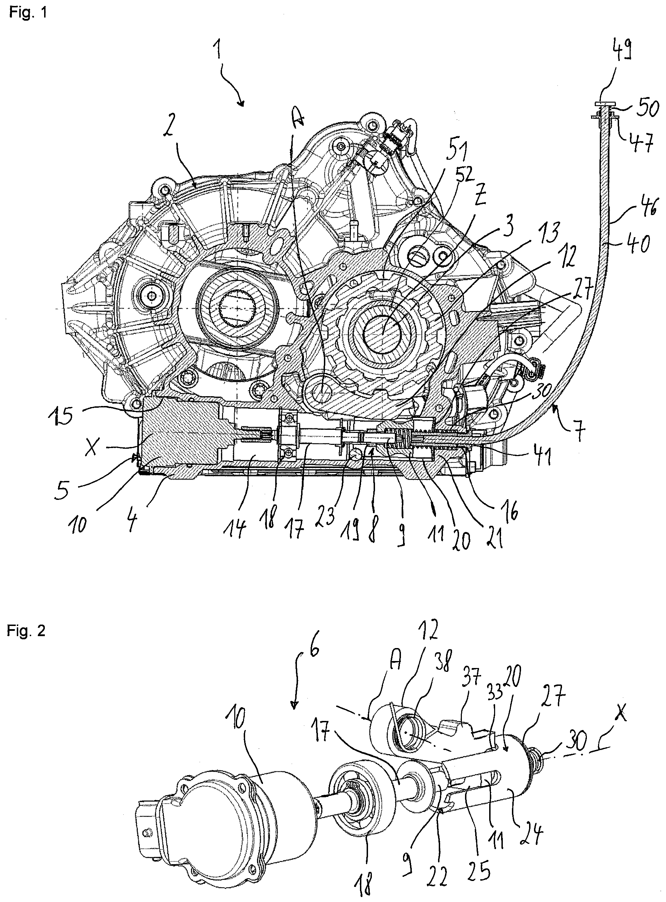

In Figur 1 ist eine Antriebseinheit 1 zum Antreiben eines Kraftfahrzeuges gezeigt. Die Antriebseinheit 1 weist in an sich bekannter Weise einen Elektroantrieb 2 mit einer elektrischen Maschine und ein mit der elektrischen Maschine zur Übertragung eines Drehmoments antriebsverbundenes Untersetzungsgetriebe sowie ein mit dem Untersetzungsgetriebe zur Übertragung eines Drehmoments antriebsverbundenes Differentialgetriebe auf. Der Elektroantrieb 2 kann beispielsweise ausgestaltet sein, um eine Drehachse des Kraftfahrzeuges als alleiniger Antrieb dieser Drehachse anzutreiben. Daneben kann eine weitere Drehachse des Kraftfahrzeuges vorgesehen sein, die von einer weiteren Antriebseinheit mit separater Antriebsquelle, beispielsweise einem Verbrennungsmotor oder einer weiteren elektrischen Maschine, angetrieben wird.

Der Elektroantrieb 2 treibt ein Antriebselement, hier in Form einer Antriebswelle 3, die eine Drehachse Z definiert, drehend an. Die Antriebswelle 3 ist im Drehmomentfluss zwischen der elektrischen Maschine und der von der elektrischen Maschine angetriebenen Drehachse des Kraftfahrzeuges angeordnet. Des Weiteren weist die Antriebseinheit 1 ein Gehäuse 4 auf, in dem die Antriebswelle 3 drehend gelagert ist.

Zum bedarfsweisen Hemmen beziehungsweise Freigeben einer Drehbewegung der Antriebswelle 3 weist die Antriebseinheit 1 eine erfindungsgemäße Parksperrenanordnung 5 auf. Diese umfasst einen steuerbaren Sperrmechanismus 6 zum Hemmen beziehungsweise Freigeben der Drehbewegung der Antriebswelle 3 und einen Entriegelungsmechanismus 7 zur manuellen Notentriegelung des Sperrmechanismus 6.

In Figur 2 ist der Sperrmechanismus 6 losgelöst von weiteren Komponenten der Parksperrenanordnung 5 oder weiteren Bauteilen der Antriebseinheit 1 dargestellt. Der steuerbare Sperrmechanismus 6 umfasst einen Spindelantrieb 8 mit einer um eine Spindelachse X drehend antreibbaren Spindelwelle 9, einen Aktuator 10 zum drehenden Antreiben der Spindelwelle 9, ein durch Drehen der Spindelwelle 9 bewegbares Stellelement 11, ein mit dem Stellelement 11 zusammenwirkendes Sperrelement 12 und ein drehfest mit der Antriebswelle 3 verbundenes Parksperrenrad 13, auf das das Sperrelement 12 blockierend oder freigebend einwirkt. Das Parksperrenrad 13 kann mit der Antriebswelle 3 auf beliebige Weise drehfest verbunden sein. Beispielsweise kann das Sperrenrad 13 formschlüssig, insbesondere mittels einer Wellenverzahnung (Splines) mit der Antriebswelle 3 verbunden werden, oder stoffschlüssig, insbesondere mittels Schweißen. Vorliegend ist das Sperrenrad 13 gekröpft, das heißt der radial außen liegende Ringabschnitt ist gegenüber dem Verbindungsabschnitt mit der Welle 3 axial versetzt. Koaxial zur Antriebswelle 3 ist ein Lager 52 erkennbar, mit dem die Welle im Gehäuse 4 drehbar gelagert ist. Der Sperrmechanismus 6 ist zusammen mit der Antriebswelle 3 in dem Gehäuse 4 untergebracht.

In Figur 1 ist erkennbar, dass unterhalb der Antriebswelle 3 im Gehäuse 4 ein länglicher Aufnahmeraum 14 ausgebildet ist, der durch eine erste Gehäusebohrung 15 und eine der ersten Gehäusebohrung 15 gegenüberliegende zweite Gehäusebohrung 16 von außen zugänglich ist. Die Haupterstreckung des Aufnahmeraumes 15 verläuft quer zur Drehachse Z.

Der Aktuator 10 ist durch die erste Gehäusebohrung 15 von außen in den Aufnahmeraum 14 eingesetzt und kann mit dem Gehäuse 4 verschraubt sein. Der Aktuator 10 ist vorzugsweise als elektromechanischer Aktuator ausgestaltet und von einer elektronischen Steuereinheit (nicht dargestellt) ansteuerbar ist. Es versteht sich jedoch, dass der Aktuator 10 auch alternative Ausgestaltungen haben kann, beispielsweise in Form eines hydraulischen oder pneumatischen Aktuators. Der Aktuator 10 treibt die Spindelwelle 9 drehend an. Der Aktuator 10 umfasst eine innenliegende Rotorwelle, die über eine Kupplung 17 mit der Spindelwelle 9 verbunden ist. Weiterhin ist ein Wälzlager 18 im Aufnahmeraum 14 des Gehäuses 4 angeordnet, dass die Spindelwelle 9 drehbar lagert. Die Spindelwelle 9 und die Rotorwelle sind konzentrisch zueinander angeordnet und um die Spindelachse X drehbar gelagert. Die Spindelachse X ist von der Drehachse Z radial beabstandet und quer zur dieser ausgerichtet. Die Haupterstreckung des Aufnahmeraumes 14 verläuft parallel zur Spindelachse X.

Der Spindelantrieb 8 weist weiterhin ein Schiebeelement, hier eine Spindelmutter 19, auf, das mit dem Stellelement 11 zusammenwirkt. Die Spindelmutter 19 stützt sich radial außen an einer Spindelhülse 20 derart ab, dass die Spindelmutter 19 drehfest gehalten und auf der Spindelwelle 9 linear verschiebbar geführt ist. Hierzu ist die Spindelhülse 20 hohlzylindrisch ausgebildet und insbesondere konzentrisch zur Spindelachse X angeordnet. Die Spindelhülse 20 stützt sich mit einer vom Aktuator 10 abgewandten Stirnseite axial an einer Gehäusewand 21 des Gehäuses 4 ab. Die entgegengesetzte, dem Aktuator 10 zugewandte Stirnseite der Spindelhülse 20 weist eine Aussparung 22 auf, in die sich ein am Gehäuse 4 abgestütztes Sicherungsmittel, hier ein Sicherungsstift 23, hinein erstreckt. Somit ist die Spindelhülse 20 zwischen der Gehäusewand 21 und dem Sicherungsstift 23 im Gehäuse 4 festgesetzt. Weiterhin weist die Spindelhülse 20 eine zylindrische Mantelfläche 24 auf, die an zwei diametral gegenüberliegenden Seiten jeweils einen Längsschlitz 25 aufweist. Die beiden Längsschlitze 25 erstrecken sich parallel zur Spindelachse X entlang des Verschiebeweges der Spindelmutter 19 und sind an der dem Aktuator 10 zugewandten Seite der Spindelhülse 20 offen ausgebildet. Die Spindelmutter 19 erstreckt sich in die beiden Längsschlitze 25 hinein und stützt sich radial an der Mantelfläche 24 der Spindelhülse 20 ab. Bei Betätigen des Aktuators 10 in einer ersten Drehrichtung bewegt sich die Spindelmutter 19 auf der Spindelwelle 9 in Richtung der Gehäusewand 21, das heißt weg vom Aktuator 10. Bei Betätigen des Aktuators 10 in einer zweiten Drehrichtung bewegt sich die Spindelmutter 19 auf der Spindelwelle 9 in Richtung des Aktuators 10.

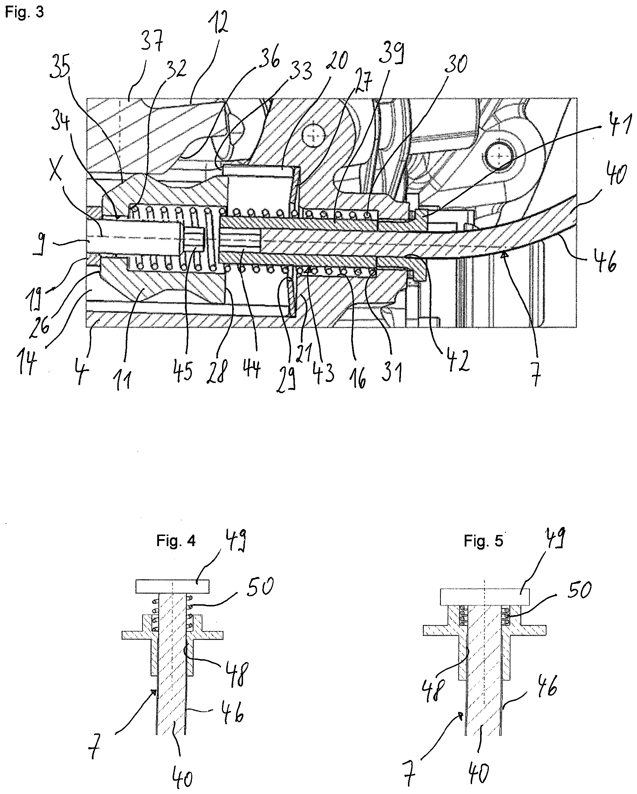

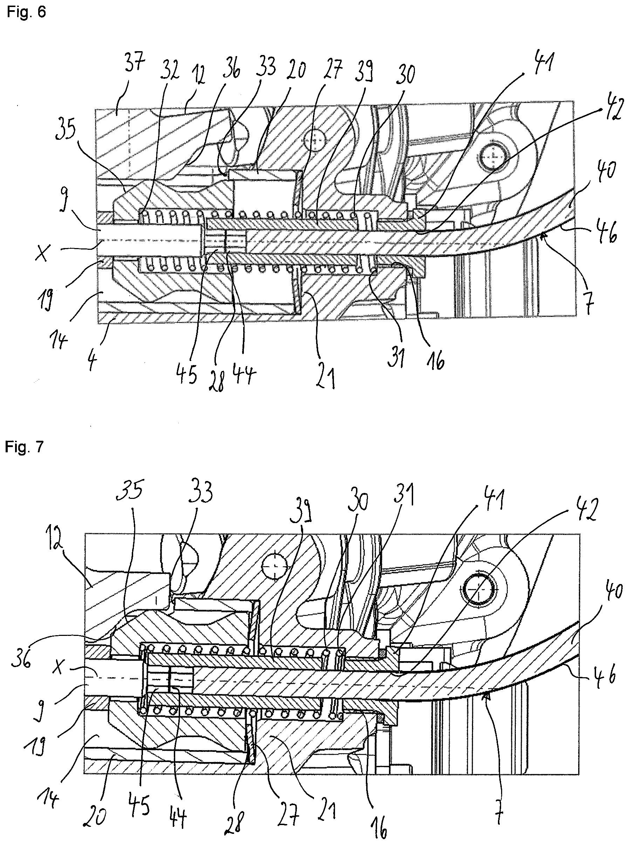

Das Stellelement 11 ist innerhalb der Spindelhülse 20 angeordnet, wobei das Stellelement 11, wie in der Figur 2 gezeigt, in der Spindelhülse 20 gelagert sein kann. Hierzu kann sich das Stellelement 11 zumindest in eine der beiden Längsschlitze 25 der Spindelhülse 20, insbesondere in die beiden Längsschlitze 25, hinein erstrecken, um sich an der Spindelhülse 20 abzustützen. Durch die sich parallel zur Spindelachse X erstreckenden Längsschlitze 25 ist das Stellelement 11 relativ zur Spindelwelle 9 linear bewegbar. Weiterhin weist das Stellelement 11 an einer dem Aktuator 10 zugewandten Seite einen umlaufenden Kragen 26 auf, über den sich das Stellelement 11 axial an der Spindelmutter 19 abstützt. Bei Betätigen des Aktuators 10 in der ersten Drehrichtung wird die Spindelwelle 9 drehend angetrieben. Durch die Drehbewegung der Spindelwelle 9 in der ersten Drehrichtung schiebt die Spindelmutter 19 das Stellelement 11 weg vom Aktuator 10 in Richtung einer Offenstellung. In Figur 7 ist der Sperrmechanismus 6 in der Offenstellung gezeigt, in der das Sperrelement 12 eine Freigabestellung einnimmt, in der die Antriebswelle 3 drehbar ist. Zwischen der Spindelhülse 20 und der Gehäusewand 21 ist ein Dämpfungselement, hier eine Tellerfeder 27 angeordnet, an der sich eine Stirnseite 28 des Stellelements 11 in der Offenstellung axial abstützt. Die Tellerfeder 27 weist eine konzentrisch zur zweiten Gehäusebohrung 16 angeordnete zentrale Öffnung 29 auf. Durch diese Öffnung 29 hindurch erstreckt sich ein Rückstellmittel, hier in Form einer Schraubendruckfeder 30, die das Stellelement 11 in Richtung des Aktuators 10 federnd beaufschlagt. Beim Betätigen des Aktuators 10 in der zweiten Drehrichtung wird die Spindelwelle 9 drehend angetrieben. Durch die Drehbewegung der Spindelwelle 9 in der zweiten Drehrichtung bewegt sich die Spindelmutter 19 auf der Spindelwelle 9 in Richtung des Aktuators 10. Das lediglich lose an der Spindelmutter 19 anliegende Stellelement 11 wird nur durch die Schraubendruckfeder 30 in Richtung einer Schließstellung rückstellt. In Figuren 3 und 6 ist das Stellelement 11 in der Schließstellung gezeigt, in der das Sperrelement 12 eine Sperrstellung einnimmt, in der das Sperrelement 12 die Drehbewegung der Antriebswelle 3 hemmt. Im Detail ist die Schraubendruckfeder 30 konzentrisch zur Spindelachse X angeordnet und stützt sich mit einem ersten Federende an einer in der zweiten Gehäusebohrung 16 ausgebildeten ringförmigen Schulter 31 axial ab. Ein entgegengesetztes zweites Federende erstreckt sich durch eine zentrale Öffnung in der Stirnseite 28 des Stellelementes 11 in dieses hinein und stützt sich an einer vom Aktuator 10 abgewandten Bodenseite 32 des Stellelements 11 axial ab.

Des Weiteren wirkt das Stellelement 11 mit dem Sperrelement 12 zusammen. Hierzu weist die Spindelhülse 20 eine Längsaussparung 33 auf, durch die das außerhalb der Spindelhülse 20 angeordnete Sperrelement 12 in die Spindelhülse 20 eingreifen kann.

Die Längsaussparung 33 ist in der Mantelfläche 24 der Spindelhülse 20 gleich beabstandet zwischen den beiden Längsschlitzen 25 ausgebildet und verläuft ebenfalls parallel zur Spindelachse X. Die Längsaussparung 33 ist an dem zum Aktuator 10 zugewandten Ende offen ausgebildet. Das Stellelement 11 ist hülsenförmig gestaltet und weist in der Bodenseite 32 eine zentrale Durchgangsbohrung 34 auf, durch die sich die Spindelwelle 9 erstreckt. Radial außerhalb des Kragens 26 weist das Stellelement 11 eine Funktionsfläche 35 auf, die mit einer entsprechenden Gegenfläche 36 des Sperrelementes 12 beim Betätigen des Sperrmechanismus 6 zusammenwirkt. Das Sperrelement 12 ist in Form einer Sperrklinke gestaltet, die an einem Ende um eine Schwenkachse A gelagert ist. Die Schwenkachse A ist parallel zur Drehachse Z ausgerichtet. An ihrem entgegengesetzten freien Ende weist das Sperrelement 12 außen die Gegenfläche 36 auf, die von der Funktionsfläche 35 des Stellelementes 11 beaufschlagbar ist, sowie innen einen Sperrzahn 37 zum Festsetzen des drehfest mit der Antriebswelle 3 verbundenen Parksperrenrades 13. Die Flächen 35, 36 sind so gestaltet, dass eine translatorische Bewegung des Stellelementes 11 entlang der Spindelachse X eine Verlagerung des Sperrelementes 12 in Richtung der Drehachse Z bewirkt. Insbesondere ist vorgesehen, dass die Funktionsfläche 35 des Stellelementes 11 konisch gestaltet ist, wobei es sich versteht, dass diese auch sphärisch gestaltet sein könnte. Die Gegenfläche 36 ist gegenüber einer Ebene, die die Drehachse Z der Antriebswelle 3 beinhaltet und durch den Kontaktpunkt zwischen Funktionsfläche 35 und Gegenfläche 36 verläuft, winklig angeordnet. Weiterhin ist eine Drehfeder 38 mit zwei Bügelenden vorgesehen, die konzentrisch zur Schwenkachse A angeordnet ist. Ein erstes Federende der Drehfeder 38 stützt sich am Gehäuse 4 und ein zweites Federende am Sperrelement 12 derart ab, dass das Sperrelement 12 in eine Freigabestellung, in der der Sperrzahn 37 und das Parksperrenrad 13 außer Eingriff sind, federnd beaufschlagt ist.

Bei Betätigen des Aktuators 10 in der zweiten Drehrichtung bewegt sich die Spindelmutter 19 auf der Spindelwelle 9 in Richtung des Aktuators 10 und die Schraubendruckfeder 30 stellt das Stellelement 11, entgegen der Federkraft der Drehfeder 38, in die Schließstellung zurück. In den Figuren 3 und 6 ist das Stellelement 11 in der Schließstellung gezeigt, in der das Sperrelement 12 die Sperrstellung einnimmt, in der das Sperrelement 12 die Drehbewegung der Antriebswelle 3 hemmt. Bei Betätigen des Aktuators 10 in der ersten Drehrichtung schiebt die Spindelmutter 19 das Stellelement 11 weg vom Aktuator 10 in Richtung der Offenstellung, wobei die Schraubendruckfeder 30 vorgespannt wird. Die Drehfeder 38 drückt das Sperrelement 12 in Richtung der Freigabestellung, wobei das Sperrelement 12 in die Freigabestellung überführt wird, sobald die Gegenfläche 36 an der Funktionsfläche 35 des Stellelementes 11 abgleiten kann. In der Figur 7 ist der Sperrmechanismus 6 in der Offenstellung gezeigt, in der das Sperrelement 12 die Freigabestellung einnimmt, in der die Antriebswelle 3 drehbar ist.

Um bei Ausfall des Aktuators 10 eine Zwangsentriegelung beziehungsweise manuelle Notentriegelung des Sperrmechanismus 6 zu ermöglichen, weist der Entriegelungsmechanismus 7 ein Entriegelungselement 39 zum Drehen der Spindelwelle 9 und ein manuell betätigbares Betätigungselement 40 zum Betätigen des Entriegelungselements 39 auf. Das Entriegelungselement 39 ist mittels des Betätigungselements 40 aus einer Normalstellung, in der das Entriegelungselement 39 von der Spindelwelle 9 beabstandet ist, in eine Eingriffsstellung, in der das Entriegelungselement 39 zum Zwangsentriegeln des Sperrmechanismus 6 mit der Spindelwelle 9 drehmomentübertragend verbunden ist, bewegbar, und vice versa. Das Entriegelungselement 39 ist in der Figur 3 in der Normalstellung und in den Figuren 6 und 7 in der Eingriffsstellung gezeigt.

Das hülsenförmige Entriegelungselement 39 ist im Gehäuse 4 angeordnet und hier in Form einer hohlzylindrischen Kunststoffhülse gestaltet. Konkret ist das Entriegelungselement 39 konzentrisch zur Schraubendruckfeder 30 angeordnet, wobei die Schraubendruckfeder 30 das Entriegelungselement 39 radial umfasst. Das Entriegelungselement 39 ist parallel zur Spindelachse X bewegbar angeordnet und erstreckt sich in die zweite Gehäusebohrung 16 hinein. Ein Außendurchmesser des Entriegelungselementes 39 ist zumindest geringfügig kleiner als ein Innendurchmesser der ringförmigen Schulter 31 des Gehäuses 4, um das Entriegelungselement 39 über die zweite Gehäusebohrung 16 ins Gehäuse 4 einsetzen zu können. In der zweiten Gehäusebohrung 16 ist eine Kabeldurchführung 41 formschlüssig eingesetzt, die mit der Schulter 31 bündig abschließt und die Beweglichkeit des Entriegelungselementes 39 axial begrenzt. In der Figur 3 ist erkennbar, dass das Entriegelungselement 39 in der Normalstellung zumindest in etwa zur Hälfte innerhalb der zweiten Gehäusebohrung 16 angeordnet ist.

Durch eine zentrale Durchtrittsöffnung 42 der Kabeldurchführung 41 ist das Betätigungselement 40 von außen in das Gehäuse 4 geführt. In der Figur 1 ist erkennbar, dass mehr als die Hälfte, insbesondere etwa 70 % bis 90 % des Betätigungselementes 40 außerhalb des Gehäuses 4 angeordnet ist. Das Entriegelungselement 39 weist einen hülsenförmigen Verbindungsabschnitt 43 auf, wobei sich das Betätigungselement 40 in den Verbindungsabschnitt 43 hinein erstreckt. Der Innendurchmesser des Verbindungsabschnittes 43 entspricht zumindest in etwa einem Innendurchmesser der Durchtrittsöffnung 42 der Kabeldurchführung 41. Zur festen Verbindung mit dem Betätigungselement 40 ist das als Kunststoffhülse gebildete Entriegelungselement 39 im Verbindungsabschnitt 43 auf das Betätigungselement 40 aufgespritzt.

An einem der Spindelwelle 9 zugewandten Längsende des Entriegelungselementes 39 ist ein erstes Formschlusselement 44 ausgebildet. Ein zweites Formschlusselement 45 ist dem ersten Formschlusselement 44 axial gegenüberliegend angeordnet, nämlich an einem dem Entriegelungselement 39 zugewandten Längsende der Spindelwelle 9. Das zweite Formschlusselement 45 ist korrespondierend zum ersten Formschlusselement 44 gestaltet und mit der Spindelwelle 9 drehmomentübertragend verbunden. Das erste Formschlusselement 44 ist hier als Innenprofil und das zweite Formschlusselement 45 als gegengleiches Außenprofil gestaltet, wobei auch eine umgekehrte Ausgestaltung möglich wäre. Das erste Formschlusselement 44 weist hier ein Innensechskantprofil und das zweite Formschlusselement 45 weist hier ein Au-ßensechskantprofil auf. Es versteht sich jedoch, dass alternativ zum Sechskantprofil auch andere Profile, zum Beispiel ein Vierkant-, Fünfkant- oder Torx-Profil, möglich wäre, um eine lösbare und drehmomentübertragende Formschluss- respektive Steckverbindung zwischen den beiden Formschlusselementen 44, 45 bereitstellen zu können.

Das Betätigungselement 40 ist in Form einer flexiblen Betätigungswelle gestaltet, die aus mehreren zu einem Drahtseil verdrehten Metalllitzen, insbesondere aus Stahl, geformt ist. Die flexible Betätigungswelle 40 ist in einem Schutzrohr, hier in einer biegsamen Hülle 46, bewegbar geführt. Die Hülle 46 stützt sich an einem dem Gehäuse 4 zugewandten Ende der Kabeldurchführung 41 axial ab. Hierzu ist die Hülle 46 zumindest teilweise zusammen mit der Betätigungswelle 40 in die Durchtrittsöffnung 42 der Kabeldurchführung 41 eingeschoben. An dem entgegengesetzten, vom Gehäuse 4 abgewandten Ende der Hülle 46 ist diese an einer weiteren Kabeldurchführung 47 axial abgestützt. Die Hülle 46 umgibt den außerhalb des Gehäuses 4 liegenden Abschnitt der Betätigungswelle 40 und ist in Verlaufsrichtung der Betätigungswelle 40 stabil gestaltet, sodass über die in der Hülle 46 geführte flexible Betätigungswelle 40 mechanische Bewegung, nämlich Druck- und Zugkräfte sowie Drehmomente, übertragen werden können.

Die weitere Kabeldurchführung 47 kann in eine Bohrung in einem Kraftfahrzeugbauteil des Kraftfahrzeuges eingesetzt werden, beispielsweise in eine Bohrung in einer Kofferraumabdeckung eines mit der Parksperrenanordnung 5 ausgestatteten Kraftfahrzeuges. Die Betätigungswelle 40 ist durch eine zentrale Durchtrittsöffnung 48 der weiteren Kabeldurchführung 47 geführt. An dem durch die weitere Kabeldurchführung 47 geführten freien Längsende der Betätigungswelle 40 ist ein Drehknauf 49 zur Vereinfachung der manuellen Betätigung der Betätigungswelle 40 angeordnet. Der Entriegelungsmechanismus 7 weist ferner Federmittel 50, hier in Form einer Schraubendruckfeder, auf, die sich zwischen dem Drehknauf 49 und der Kabeldurchführung 47 abstützen. Auf diese Weise ist das Entriegelungselement 39 in Richtung der Normalstellung federnd beaufschlagt, in der das Entriegelungselement 39 von der Spindelwelle 9 beabstandet ist. Der Drehknauf 49 ist in Figur 4 in der Normalstellung und in Figur 5 in der Eingriffsstellung gezeigt.

Im regulären Betrieb der Parksperrenanordnung 5 wird der Sperrmechanismus 6 durch den Aktuator 10 betrieben, sodass durch die vom Aktuator 10 erzeugten Drehbewegungen die Parksperre aktiviert und deaktiviert werden kann. In der Offenstellung des Sperrmechanismus 6 liegt das Stellelement 11 mit der Stirnseite 28 an der Tellerfeder 27 an. Wenn die Parksperrenanordnung 5 aktiviert wird, um das Kraftfahrzeug in einer Parkstellung am Wegrollen zu hindern, erhält der Aktuator 10 ein entsprechendes elektronisches Signal von der Steuerungseinheit. Daraufhin dreht der Aktuator 10 in der zweiten Drehrichtung, um die Spindelmutter 19 auf der Spindelwelle 9 in Richtung des Aktuators 10 zu bewegen. Das lediglich lose an der Spindelmutter 19 anliegende Stellelement 11 wird durch die in der Offenstellung vorgespannte Schraubendruckfeder 30 zurückgestellt, respektive der Spindelmutter 19 nachgeführt. Die translatorische Bewegung des Stellelementes 11 entlang der Spindelachse X bewirkt eine Schwenkbewegung des Sperrelementes 12 um die Schwenkachse A in die Sperrstellung, in der die Drehfeder 38 vorgespannt ist. In der Sperrstellung greift der Sperrzahn 37 in eine von mehreren Rastausnehmungen 51 des Parksperrenrades 13 ein und blockiert die Drehbewegung der Antriebswelle 3. In dem nun aktivierten Zustand der Parksperrenanordnung 5 befindet sich der Sperrmechanismus 6 in der Schließstellung, die in der Figur 3 gezeigt ist. Dagegen befindet sich der Entriegelungsmechanismus 7 im regulären Betrieb der Parksperrenanordnung 5 weiterhin in der Normalstellung, die ebenfalls in der Figur 3 gezeigt ist.

Zum Öffnen der geschlossenen Parksperrenanordnung 5 sind in der weiteren Abfolge zwei Szenarien möglich. Wenn der Aktuator 10 zum drehenden Antreiben der Spindelwelle 9 nicht zur Verfügung steht, kann die Drehbewegung der blockierten Antriebswelle 3 mittels des Entriegelungsmechanismus 7 zwangsweise wieder freigegeben werden. Hierzu wird die Spindelwelle 9 mittels des Entriegelungsmechanismus 7 manuell in der ersten Drehrichtung gedreht. Der Drehknauf 49 wird manuell, ausgehend von der in der Figur 4 gezeigten Normalstellung des Drehknaufs 49, nach unten gegen die weitere Kabeldurchführung 47 gedrückt. Dabei wird das Federmittel 50 vorgespannt. Die manuell aufgebrachte Druckkraft wird über die Betätigungswelle 40 auf das Entriegelungselement 39 übertragen, das aus der in der Figur 3 gezeigten Normalstellung in die in der Figur 6 gezeigten Eingriffsstellung überführt wird. In der Eingriffsstellung ist das Entriegelungselement 39 axial in Richtung der Spindelwelle 9 bewegt und entsprechend von der Schulter 31 der gestuft ausgebildeten zweiten Gehäusebohrung 16 beabstandet. Das Entriegelungselement 39 ist auf die Spindelwelle 9 aufgeschoben, sodass das erste Formschlusselement 44 und das zweite Formschlusselement 45 in Eingriff stehen und eine drehmomentübertragende Verbindung zwischen dem Entriegelungselement 39 und der Spindelwelle 9 bereitstellen. Anschließend wird der Drehknauf 49 manuell in der ersten Drehrichtung gedreht, wobei das Drehmoment über die Betätigungswelle 40 und das Entriegelungselement 39 auf die Spindelwelle 9 übertragen wird. Dann bewegt sich die Spindelmutter 19 auf der Spindelwelle 9 in Richtung der Gehäusewand 21 und schiebt das Stellelement 11 auf der Spindelwelle 9 bis an die Tellerfeder 27 heran in die Offenstellung. Dabei wird die Schraubendruckfeder 30 vorgespannt. Sobald die Gegenfläche 36 des Sperrelementes 12 an der Funktionsfläche 35 des Stellelementes 11 abgleiten kann, wird das Sperrelement 12 durch die vorgespannte Drehfeder 38 in die Freigabestellung verschwenkt und der Sperrzahn 37 außer Eingriff gebracht. In dem nun deaktivierten Zustand der Parksperrenanordnung 5 befindet sich der Sperrmechanismus 6 in der Offenstellung, die in der Figur 7 gezeigt ist. Der Entriegelungsmechanismus 7 befindet sich in dem in der Figur 7 gezeigten Zustand in einer notentriegelten Stellung, in der der Drehknauf 49, wie in der Figur 5 gezeigt, weiterhin nach unten gedrückt wird. Sobald der Drehknauf 49 losgelassen wird, schnellt der in die Normalstellung federnd beaufschlagte Drehknauf 49 zurück in die in der Figur 4 gezeigte Normalstellung. Dabei zieht die Betätigungswelle 40 das Entriegelungselement 39 mit in die Normalstellung und bringt das erste Formschlusselement 44 und das zweite Formschlusselement 45 wieder außer Eingriff. In dem nun deaktivierten Zustand der Parksperrenanordnung 5 befindet sich der Sperrmechanismus 6 wieder in der Offenstellung, in der die Drehbewegung der Antriebswelle 3 freigegeben ist.

Wenn jedoch der Aktuator 10 zum Öffnen der Parksperrenanordnung 5 zur Verfügung steht, wird der Entriegelungsmechanismus 7 nicht benötigt. Vielmehr verbleibt der Entriegelungsmechanismus 7 im regulären Betrieb der Parksperrenanordnung 5 in der Normalstellung, in der das Entriegelungselement 39 von der Spindelwelle 9 beabstandet ist. Zum Öffnen der Parksperre übermittelt die Steuerungseinheit der Parksperre ein entsprechendes elektronisches Signal an den Aktuator 10, der daraufhin in der ersten Drehrichtung dreht. Dann bewegt sich die Spindelmutter 19 auf der Spindelwelle 9 in Richtung der Gehäusewand 21 und schiebt das Stellelement 11 auf der Spindelwelle 9 bis an die Tellerfeder 27 heran in die Offenstellung. Dabei wird die Schraubendruckfeder 30 vorgespannt. Sobald die Gegenfläche 36 des Sperrelementes 12 an der Funktionsfläche 35 des Stellelementes 11 abgleiten kann, wird das Sperrelement 12 durch die vorgespannte Drehfeder 38 in die Freigabestellung verschwenkt und der Sperrzahn 37 außer Eingriff gebracht. In dem nun deaktivierten Zustand der Parksperrenanordnung 5 befindet sich der Sperrmechanismus 6 in der Offenstellung und das Entriegelungselement 39 weiterhin in der von der Spindelwelle 9 beabstandeten Normalstellung.

### Bezugszeichenliste

- 1: Antriebseinheit
- 2: Elektroantrieb
- 3: Antriebswelle
- 4: Gehäuse
- 5: Parksperrenanordnung
- 6: Sperrmechanismus
- 7: Entriegelungsmechanismus
- 8: Spindelantrieb
- 9: Spindelwelle
- 10: Aktuator
- 11: Stellelement
- 12: Sperrelement
- 13: Parksperrenrad
- 14: Aufnahmeraum
- 15: erste Gehäusebohrung
- 16: zweite Gehäusebohrung
- 17: Kupplung
- 18: Wälzlager
- 19: Spindelmutter
- 20: Spindelhülse
- 21: Gehäusewand
- 22: Aussparung
- 23: Sicherungsstift
- 24: Mantelfläche
- 25: Längsschlitz
- 26: Kragen
- 27: Tellerfeder
- 28: Stirnseite
- 29: Öffnung
- 30: Schraubendruckfeder
- 31: Schulter
- 32: Bodenseite
- 33: Längsaussparung
- 34: Durchgangsbohrung
- 35: Funktionsfläche
- 36: Gegenfläche
- 37: Sperrzahn
- 38: Drehfeder
- 39: Entriegelungselement
- 40: Betätigungswelle
- 41: Kabeldurchführung
- 42: Durchtrittsöffnung
- 43: Verbindungsabschnitt
- 44: erstes Formschlusselement
- 45: zweites Formschlusselement
- 46: Hülle
- 47: Kabeldurchführung
- 48: Durchtrittsöffnung
- 49: Drehknauf
- 50: Federmittel
- 51: Rastausnehmung
- 52: Lager

- A: Schwenkachse
- X: Spindelachse
- Z: Drehachse

## Patentansprüche

1. Parksperrenanordnung (5) für einen Antriebsstrang eines Kraftfahrzeuges, umfassend:
einen steuerbaren Sperrmechanismus (6) zum Blockieren einer Drehbewegung eines Antriebselementes (3) im Antriebstrang des Kraftfahrzeugs, wobei der Sperrmechanismus (6) einen Spindelantrieb (8) mit einer um eine Spindelachse (X) drehend antreibbaren Spindelwelle (9), einen Aktuator (10) zum drehenden Antreiben der Spindelwelle (9) und ein durch Drehen der Spindelwelle (9) bewegbares Stellelement (11) zum Betätigen eines Sperrelements (12), das zumindest mittelbar auf das Antriebselement (3) blockierend oder freigebend einwirkt, aufweist, und
einen Entriegelungsmechanismus (7) zum Zwangsentriegeln des Sperrmechanismus (6), wobei der Entriegelungsmechanismus (7) ein Entriegelungselement (39) zum Drehen der Spindelwelle (9) und ein manuell betätigbares Betätigungselement (40) zum Betätigen des Entriegelungselements (39) aufweist,
**dadurch gekennzeichnet,**
**dass** das Entriegelungselement (39) mittels des Betätigungselements (40) aus einer Normalstellung, in der das Entriegelungselement (39) von der Spindelwelle (9) beabstandet ist, in eine Eingriffsstellung, in der das Entriegelungselement (39) zum Zwangsentriegeln des Sperrmechanismus (6) mit der Spindelwelle (9) drehmomentübertragend verbunden ist, bewegbar ist.

2. Parksperrenanordnung (5) nach Anspruch 1, **dadurch gekennzeichnet,**
**dass** das Entriegelungselement (39) um die Spindelachse (X) drehbar angeordnet und in Richtung der Spindelachse (X) bewegbar geführt ist.

3. Parksperrenanordnung (5) nach Anspruch 1 oder 2, **dadurch gekennzeichnet,**
**dass** das Entriegelungselement (39) drehfest mit dem Betätigungselement (40) verbunden ist.

4. Parksperrenanordnung (5) nach einem der Ansprüche 1 bis 3, **dadurch gekennzeichnet,**
**dass** das Betätigungselement in Form einer Betätigungswelle (40) gestaltet ist.

5. Parksperrenanordnung (5) nach einem derAnsprüche 1 bis 4, **dadurch gekennzeichnet,**
**dass** der Entriegelungsmechanismus (7) Federmittel (50) aufweist, die das Entriegelungselement (39) in Richtung der Normalstellung federnd beaufschlagen.

6. Parksperrenanordnung (5) nach einem derAnsprüche 1 bis 5, **dadurch gekennzeichnet,**
**dass** das Entriegelungselement (39) einen hülsenförmigen Verbindungsabschnitt (43) aufweist, wobei sich das Betätigungselement (40) in den Verbindungsabschnitt (43) hinein erstreckt.

7. Parksperrenanordnung (5) nach einem derAnsprüche 1 bis 6, **dadurch gekennzeichnet,**
**dass** das Entriegelungselement (39) ein erstes Formschlusselement (44) aufweist, und dass der Sperrmechanismus (6) ein zweites Formschlusselement (45), das korrespondierend zum ersten Formschlusselement (44) gestaltet und mit der Spindelwelle (9) drehmomentübertragend verbunden ist, aufweist.

8. Parksperrenanordnung (5) nach Anspruch 7, **dadurch gekennzeichnet,**
**dass** das erste Formschlusselement (44) ein Innenprofil oder Außenprofil aufweist, und dass das zweite Formschlusselement (45) ein gegengleiches Profil aufweist.

9. Parksperrenanordnung (5) nach Anspruch 7 oder 8, **dadurch gekennzeichnet,**
**dass** das erste Formschlusselement (44) drehfest mit dem Betätigungselement (40) verbunden ist.

10. Parksperrenanordnung (5) nach einem der Ansprüche 7 bis 9, **dadurch gekennzeichnet,**
**dass** das zweite Formschlusselement (45) an einem vom Aktuator (10) entfernt liegenden Längsende der Spindelwelle (9) angeordnet ist.

11. Parksperrenanordnung (5) nach einem der Ansprüche 1 bis 10, **dadurch gekennzeichnet,**
**dass** das Stellelement (11) in eine Offenstellung überführbar ist, in der das Sperrelement (12) eine Freigabestellung einnimmt, in der das Antriebselement (3) drehbar ist, und dass das Stellelement (11) in eine Schließstellung überführbar ist, in der das Sperrelement (12) eine Sperrstellung einnimmt, in der das Sperrelement (12) die Drehbewegung des Antriebselementes (3) hemmt.

12. Parksperrenanordnung (5) nach einem der Ansprüche 1 bis 11, **dadurch gekennzeichnet,**
**dass** der Sperrmechanismus (6) eine Rückstellfeder (30) aufweist, die das Stellelement (11) in Richtung der Schließstellung federnd beaufschlagt.

13. Parksperrenanordnung (5) nach Anspruch 12, **dadurch gekennzeichnet,**
**dass** die Rückstellfeder (30) radial außerhalb des Entriegelungselements (39) angeordnet ist.

14. Parksperrenanordnung (5) nach Anspruch 12 oder 13, **dadurch gekennzeichnet,**
**dass** der Spindelantrieb (8) eine auf der Spindelwelle (9) drehfest gehaltene Spindelmutter (19) aufweist, wobei sich das Stellelement (11) mit einer dem Aktuator (10) zugewandten ersten Außenfläche (26) an der Spindelmutter (19) abstützt, und wobei sich die Rückstellfeder (30) an einer der ersten Außenfläche (26) entgegengesetzten zweiten Außenfläche (32) des Stellelementes (11) abstützt.

15. Antriebseinheit insbesondere für eine Elektroantriebsanordnung zum Antreiben eines Kraftfahrzeuges, umfassend
ein Antriebselement (3) des Kraftfahrzeuges,
ein Gehäuse (4), in dem das Antriebselement (3) drehbar gelagert ist, und
eine Parksperrenanordnung (5) zum Blockieren einer Drehbewegung des Antriebselementes (3),
**dadurch gekennzeichnet,**
**dass** die Parksperrenanordnung (5) nach einem der Ansprüche 1 bis 14 ausgebildet ist, wobei der Sperrmechanismus (6) im Gehäuse (4) angeordnet ist.

## Claims

1. Parking lock arrangement (5) for a drive train of a motor vehicle, comprising:
a controllable locking mechanism (6) for blocking a rotational movement of a drive element (3) in the drive train of the motor vehicle, wherein the locking mechanism (6) comprises a spindle drive (8) with a spindle shaft (9) rotationally drivable about a spindle axis (X), an actuator (10) for rotatingly driving the spindle shaft (9) and a positioning element (11) movable by rotating the spindle shaft (9) for actuating a blocking element (12), which acts at least indirectly on the drive element (3) in a blocking or releasing manner, and
an unlocking mechanism (7) for forced releasing of the locking mechanism (6), the unlocking mechanism (7) comprises an unlocking element (39) for rotating the spindle shaft (9) and a manually operable control element (40) for operating the unlocking element (39), **characterized in**
**that** the unlocking element (39) is movable via the control element (40) from a normal position, in which the unlocking element (39) is spaced apart from the spindle shaft (9), into an engagement position, in which the unlocking element (39) is coupled in torque-transmitting manner to the spindle shaft (9) for forced releasing of the locking mechanism (6).

2. Parking lock arrangement (5) according to claim 1, **characterized in**
**that** the unlocking element (39) is arranged rotatably about the spindle axis (X) and is guided movably in the direction of the spindle axis (X).

3. Parking lock arrangement (5) according to claim 1 or 2, **characterized in**
**that** the unlocking element (39) is rotatably fixedly connected to the control element (40).

4. Parking lock arrangement (5) according to one of claims 1 to 3, **characterized in**
**that** the control element is designed in form of a control shaft (40).

5. Parking lock arrangement (5) according to one of claims 1 to 4, **characterized in**
**that** the unlocking mechanism (7) comprises spring means (50) resiliently biasing the unlocking element (39) towards the normal position.

6. Parking lock arrangement (5) according to one of claims 1 to 5, **characterised in**
**that** the unlocking element (39) comprises a sleeve-shaped connecting portion (43), wherein the control element (40) extends into the connecting portion (43).

7. Parking lock arrangement (5) according to one of claims 1 to 6, **characterised in**
**that** the unlocking element (39) comprises a first positive-locking element (44), and
**that** the locking mechanism (6) comprises a second positive-locking element (45), which is configured correspondingly to the first positive-locking element (44) and is coupled in torque-transmitting manner to the spindle shaft (9).

8. Parking lock arrangement (5) according to claim 7, **characterized in**
**that** the first positive-locking element (44) comprises an inner profile or an outer profile, and
**that** the second positive-locking element (45) comprises an oppositely shaped profile.

9. Parking lock arrangement (5) according to claim 7 or 8, **characterized in**
**that** the first positive-locking element (44) is rotatably fixedly connected to the control element (40).

10. Parking lock arrangement (5) according to one of claims 7 to 9, **characterized in**
**that** the second positive-locking element (45) is arranged at a longitudinal end of the spindle shaft (9) remote from the actuator (10).

11. Parking lock arrangement (5) according to one of claims 1 to 10, **characterized in**
**that** the positioning element (11) is transferable into an open position, in which the blocking element (12) is in a releasing position, in which the drive element (3) can be rotated, and
**that** the control element (11) is transferable into a closed position, in which the blocking element (12) is in a blocking position, in which the blocking element (12) blocks the rotary movement of the drive element (3).

12. Parking lock arrangement (5) according to one of claims 1 to 11, **characterized in**
**that** the locking mechanism (6) comprises a return spring (30) resiliently biasing the positioning element (11) towards the closed position.

13. Parking lock arrangement (5) according to claim 12, **characterized in**
**that** the return spring (30) is arranged radially outside the unlocking element (39).

14. Parking lock arrangement (5) according to claim 12 or 13, **characterized in**
**that** the spindle drive (8) comprises a spindle nut (19), which is held rotationally fixed on the spindle shaft (9), wherein the positioning element (11) is supported with a first outer surface (26) facing the actuator (10) on the spindle nut (19), and wherein the return spring (30) is supported on a second outer surface (32) of the positioning element (11) being opposite the first outer surface (26).

15. Drive unit, for instance for an electric drive arrangement, for driving a motor vehicle comprising
a drive element (3) of the motor vehicle,
a housing (4), in which the drive element (3) is rotatably mounted, and
a parking lock arrangement (5) for blocking a rotational movement of the drive element (3),
**characterized in**
**that** the parking lock arrangement (5) is configured in accordance with one of claims 1 to 14, wherein the parking lock mechanism (6) is arranged in the housing (4).

## Revendications

1. Agencement de frein de stationnement (5) pour une chaîne cinématique d'un véhicule, comprenant :
un mécanisme de frein (6) pouvant être commandé pour bloquer un mouvement de rotation d'un élément d'entraînement (3) dans la chaîne cinématique du véhicule, dans lequel le mécanisme de frein (6) présente un entraînement à broche (8) avec un arbre de broche (9) pouvant être entraîné en rotation sur un axe de broche (X), un actionneur (10) pour l'entraînement rotatif de l'arbre de broche (9) et un élément de réglage (11) mobile par rotation de l'arbre de broche (9) pour actionner un élément de frein (12) qui agit au moins directement sur l'élément d'entraînement (3) en le bloquant ou en le débloquant, et
un mécanisme de déverrouillage (7) pour le déverrouillage forcé du mécanisme de frein (6), dans lequel le mécanisme de déverrouillage (7) présente un élément de déverrouillage (39) pour la rotation de l'arbre de broche (9) et un élément d'actionnement (40) pouvant être actionné manuellement pour actionner l'élément de déverrouillage (39), **caractérisé en ce que** l'élément de déverrouillage (39) est mobile, au moyen de l'élément d'actionnement (40), d'une position normale dans laquelle l'élément de déverrouillage (39) est distant de l'arbre de broche (9), à une position de prise dans laquelle l'élément de déverrouillage (39) est relié à l'arbre de broche (9) en transmission de couple de rotation pour le déverrouillage forcé du mécanisme de frein (6).

2. Agencement de frein de stationnement (5) selon la revendication 1, **caractérisé en ce que** l'élément de déverrouillage (39) est disposé rotatif sur l'axe de broche (X) et est dirigé mobile en direction de l'axe de broche (X).

3. Agencement de frein de stationnement (5) selon la revendication 1 ou 2, **caractérisé en ce que** l'élément de déverrouillage (39) est relié fixe en rotation à l'élément d'actionnement (40).

4. Agencement de frein de stationnement (5) selon l'une des revendications 1 à 3, **caractérisé en ce que** l'élément d'actionnement à la forme d'un arbre d'actionnement (40) .

5. Agencement de frein de stationnement (5) selon l'une des revendications 1 à 4, **caractérisé en ce que** le mécanisme de déverrouillage (7) présent des moyens de ressort (50) qui sollicitent l'élément de déverrouillage (39) en le poussant en direction de la position normale.

6. Agencement de frein de stationnement (5) selon l'une des revendications 1 à 5, **caractérisé en ce que** l'élément de déverrouillage (39) présente un tronçon de liaison (43) en forme de manchon, dans lequel l'élément d'actionnement (40) s'étend à l'intérieur du tronçon de liaison (43).

7. Agencement de frein de stationnement (5) selon l'une des revendications 1 à 6, **caractérisé en ce que** l'élément de déverrouillage (39) présente un premier élément à complémentarité de formes (44) et que le mécanisme de frein (6) présente un second élément à complémentarité de formes (45) qui est formé en correspondant au premier élément à complémentarité de formes (44) et est relié à l'arbre de broche (9) en transmission de couple de rotation.

8. Agencement de frein de stationnement (5) selon la revendication 7, **caractérisé en ce que** le premier élément à complémentarité de formes (44) présente un profil intérieur ou extérieur et que le second élément à complémentarité de forme (45) présente un profil inverse.

9. Agencement de frein de stationnement (5) selon la revendication 7 ou 8, **caractérisé en ce que** le premier élément à complémentarité de formes (44) est relié à l'élément d'actionnement (40) en étant fixe en rotation.

10. Agencement de frein de stationnement (5) selon l'une des revendications 7 à 9, **caractérisé en ce que** le second élément à complémentarité de forme (45) est disposé sur une extrémité longitudinale de l'arbre de broche (9) éloignée de l'actionneur (10).

11. Agencement de frein de stationnement (5) selon l'une des revendications 1 à 10, **caractérisé en ce que** l'élément de réglage (11) peut être mis dans une position ouverte dans laquelle l'élément de frein (12) adopte une position de déblocage dans laquelle l'élément d'entraînement (3) est rotatif, et que l'élément de réglage (11) peut être mis dans une position de fermeture dans laquelle l'élément de frein (12) adopte une position de blocage dans laquelle l'élément de frein (12) empêche le mouvement de rotation de l'élément d'entraînement (3).

12. Agencement de frein de stationnement (5) selon l'une des revendications 1 à 11, **caractérisé en ce que** le mécanisme de frein (6) présente un ressort de rappel (30) qui sollicite l'élément de réglage (11) en le poussant en direction de la position de fermeture.

13. Agencement de frein de stationnement (5) selon la revendication 12, **caractérisé en ce que** le ressort de rappel (30) est disposé radialement hors de l'élément de déverrouillage (39).

14. Agencement de frein de stationnement (5) selon la revendication 12 ou 13, **caractérisé en ce que** l'entraînement à broche (8) présente un écrou de broche (19) maintenu fixe en rotation sur l'arbre de broche (9), dans lequel l'élément de réglage (11) s'appuie sur l'écrou de broche (19) par une première face extérieure (26) tournée vers l'actionneur (10), et dans lequel le ressort de rappel (30) s'appuie sur une seconde face extérieure (32) de l'élément de réglage (11) opposée à la première face extérieure (26).

15. Unité d'entraînement, en particulier pour un agencement de commande électrique pour l'entraînement d'un véhicule, comprenant
un élément d'entraînement (3) du véhicule,
un logement (4) dans lequel l'élément d'entraînement (3) est disposé rotatif, et un agencement de frein de stationnement (5) pour bloquer un mouvement de rotation de l'élément d'entraînement (3),
**caractérisé en ce que**
l'agencement de frein de stationnement (5) est conçu selon l'une des revendications 1 à 14, dans laquelle le mécanisme de frein (6) est disposé dans le logement (4) .
